# EUROPÄISCHE PATENTSCHRIFT

(11) **EP 0 873 499 B1**
(45) Veröffentlichungstag und Bekanntmachung des Hinweises auf die Patenterteilung: **23.01.2002**
(21) Anmeldenummer: 97900011.4
(22) Anmeldetag: 08.01.1997
(51) Int. Cl.: G01J 3/52, G09B 19/00, B44D 3/00

(54) **FÜNFFARBENTHEORIE**
FIVE COLOUR THEORY
THEORIE DES CINQ COULEURS

(30) Priorität: 11.01.1996 CH 8096
(43) Veröffentlichungstag der Anmeldung: 28.10.1998
(73) Patentinhaber: Alois K. Diethelm AG, 8306 Brüttisellen (CH)
(72) Erfinder: CARSON, Susanna, Vancouver, British Columbia V5Y 2G7 (CA)
(74) Vertreter: Troesch Scheidegger Werner AG
(86) Internationale Anmeldenummer: CH9700005
(87) Internationale Veröffentlichungsnummer: WO9725599

(56) Entgegenhaltungen:
- DE-A- 2 723 367
- US-A- 1 598 899
- US-A- 4 211 016
- US-A- 5 161 974
- PATENT ABSTRACTS OF JAPAN vol. 13, no. 239 (P-879), 6.Juni 1989 & JP 01 043732 A (TOSHIO TAKAHATA), 16.Februar 1989,
- HARALD KüPPERS: "Das Grundgesetz der Farbenlehre", 1988, DUMONT, KöLN
- "Was bringt der 7-Farbendruck nach Küppers bezüglich Farbumfang gegenüber dem Vierfarbendruck"; Prof. Dr. K. Schläpfer, EMPA/UGRA, St Gallen (CH), 1992.

## Beschreibung

Die vorliegende Erfindung betrifft eine Farbenlehre sowie ein Verfahren zum Erzeugen von Farben, Farbtönen und Farbmischungen sowie eine Anwendung des Verfahrens.

Für Farbenlehren gibt es keine Grundlage. Es gibt mannigfache Theorien, die entweder physikalisch oder technisch anwendbar sind, aber keine, die befriedigend übergreifen. Wichtigste Doktrinen für den Naturwissenschafter: Newtons Farbtheorie; für den Künstler, Drucker, Maler: Goethes Farbenlehre. Vielfach werden Farben als Grund- oder Primärfarben bezeichnet, die eindeutig gemischt sind: z.B. DIN System: Grün (Gelb und Blau). Additive oder subtraktive Dreifarbentheorien erzeugen in ihrer Anwendung keine befriedigenden Ergebnisse.

Eine Farbenlehre, bei der die Grundfarben Cyan, Gelb und Magenta durch Violettblau, Grün, Rot und Schwarz ergänzt werden, ist aus der 7-Farbenlehre nach küppers bekannt.

Der in der Drucktechnik verwendete Vierfarbendruck, insbesondere zur Bildwiedergabe in allen erforderlichen Farben, bedient sich wieder der drei Grundfarben Blau (Cyan), Gelb und Rot (Magenta) sowie Schwarz.

Insbesondere im Druck besteht das Problem der ungenauen Farbwiedergabe. So kann beispielsweise mit dem hochmodernen Laserdruckverfahren ein mit Aquarellfarben erzeugtes Bild nicht farbtreu wiedergegeben werden. Gewisse Farbtöne werden verfälscht wiedergegeben, wie beispielsweise ein helles Blassgrün wird als kräftiges Gelb gedruckt. Aber auch in anderen Bereichen, wo bestimmte Farbtöne durch Mischen der drei Grundfarben zu erzeugen sind, ist einerseits der Mischvorgang äusserst kompliziert und umfangreich, und zum andern wird der Farbton der Mischfarbe nur selten genau getroffen. Insbesondere in technischen Anwendungsbereichen, wie dem Einfärben von Kunststoffen, dem Herstellen von Pulverlacken, dem Herstellen von Industriefarben bzw. -lacken, ist es aber notwendig, bestimmte Mischfarbtöne genau zu reproduzieren, wozu in der Regel komplizierte, computergesteuerte Verfahren verwendet werden, die in den seltensten Fällen rasch zu einem befriedigenden Ziel führen.

Schlussendlich besteht ein Problem darin, dass für das Erzeugen der Mischtöne riesige Sortimente an bereits vorgemischten Zwischentönen an Lager gelegt werden müssen, was unerwünscht ist.

Es ist daher eine Aufgabe der vorliegenden Erfindung, eine Basis zu schaffen bzw. eine Farbtheorie zu entwickeln, mittels welcher Grundfarben bestimmt bzw. geschaffen werden, um bestimmte Mischtöne wesentlich vereinfacht herstellen zu können.

Die gestellte Aufgabe wird mittels einer Farbwiedergabe insbesondere nach Anspruch 1 gelöst. Weiter vorgeschlagen wird ein Verfahren zum Erzeugen von Farben, Farbtönen und Farbmischungen gemäss dem Wortlaut nach Anspruch 4.

Ueberraschenderweise hat es sich gezeigt, dass, basierend auf fünf Primär- bzw. Grundfarben sowie Schwarz und Weiss, es wesentlich einfacher ist, Farbtöne, Mischfarben und Farbnuancen zu erzeugen. Bei den fünf Primärfarben handelt es sich, nach ihren Frequenzen geordnet, um Magenta, Rot, Gelb, Cyan und Ultramarin. Wesentlich ist, dass durch Mischen der fünf vorgeschlagenen Primärfarben Schwarz entsteht. Demgegenüber ergibt bekanntlich die Summe aller Spektralfarben Licht (oft bezeichnet als weiss!).

Als Sekundärfarben ergeben sich die folgenden: Karmin - Orange - Grün - Blau sowie Violett. Damit ergeben sich gemäss der erfindungsgemäss vorgeschlagenen Farbenlehre die folgenden Komplementärfarbenpaare: Magenta/Grün, Rot/Blau, Gelb/Violett, Cyan/Karmin sowie Ultramarin/Orange.

Insbesondere bei Anwendungen beispielsweise in der Drucktechnik ist eine präzise Farbwiedergabe unter Verwendung der erfindungsgemäss vorgeschlagenen Farbenlehre möglich. Durch das Mischen der fünf vorgeschlagenen Grundfarben, allenfalls ergänzt mit Weiss und Schwarz, wird es auf einfachste Art und Weise möglich, sämtliche gewünschten Farbmischungen bzw. Farbnuancen und Farbtöne herzustellen.

Bei Farblaserkopierern werden heute nach dem Siebdruckschema die drei Grundfarben, bei einzelnen Herstellern ergänzt mit Rot, Ultramarin und Grün sowie Schwarz, in Rastern interpretiert, was, wie oben erwähnt, zu unbefriedigenden Resultaten führt. Durch die erfindungsgemäss vorgeschlagene Interpretation mittels der fünf Grundfarben als Mess- und Vergleichswerte ergeben sich sofort gute Resultate, insbesondere auch in bezug auf Grün- und Gelbtöne.

Im Digitaldruck wird nicht wie im Siebdruck mit Druckplatten oder vier Rastern gearbeitet, sondern die Vorlage wird direkt via Computer gelesen und interpretiert, was eine rationelle Herstellung z.B. von Farbprospekten erlaubt. Mit der vorliegenden Farbenlehre ist es möglich, präzise Farblesungen mittels Wellenlänge der entsprechenden Farbe zu nutzen. Die eingespeicherten fünf Grundfarben, d.h. die bekannten Grundfarben sowie zusätzlich Rot, Ultramarin und allenfalls Schwarz als Grundinformation, ermöglichen so auf direktem Weg und ohne Farbfehler eine genaueste Wiedergabe in den Originalfarbtönen. Damit wäre es möglich, endlich Kunstdrucke authentisch, d.h. übereinstimmend mit der Vorlage, wiedergeben zu können.

In der Farbphotographie, wo komplementär zum Film kopiert wird, sind Farbresultate in der Regel subjektive Interpretationen des Kopierenden, weil die Komplementärfarben nach herkömmlicher Farbenlehre nicht präzis sind. Durch die Anwendung der fünf Grundfarben, nach Wellenlängen geordnet, weichen die Komplementärfarben von den herkömmlichen ab. Durch Umsetzung der tatsächlich gemessenen Wellenlänge in ihre Komplementärfarbe können authentische Bilder erzeugt werden, unabhängig von derjenigen Person, welche für das Kopieren verantwortlich ist.

Es ergeben sich auch Vorteile in all denjenigen Bereichen, wo eingefärbte Materialien verwendet werden resp. wo mit Farben gearbeitet wird. Sowohl beispielsweise für den Flachmaler wird es möglich, mittels der fünf Grundfarben eindeutige Mischungen zu erzeugen, wie aber auch in technischen Bereichen, wie beispielsweise beim Erzeugen von Pulverlacken, Nasslacken und dergleichen.

Aber auch in der Psychotherapie ermöglicht die Fünffarbentheorie eine ganzheitliche Begleitung, gerade weil Schwarz und Weiss gleichwertig eingestuft werden und die Interpretation bzw. Zuordnung der einzelnen Farben im emotionalen Bereich den positiven und negativen Aspekt nicht wertend integriert. Durch Einbezug des ganzen Spektrums wird der Mensch als Ganzes respektiert.

Anhand der beigefügten Figuren soll die Erfindung zusätzlich erläutert werden.

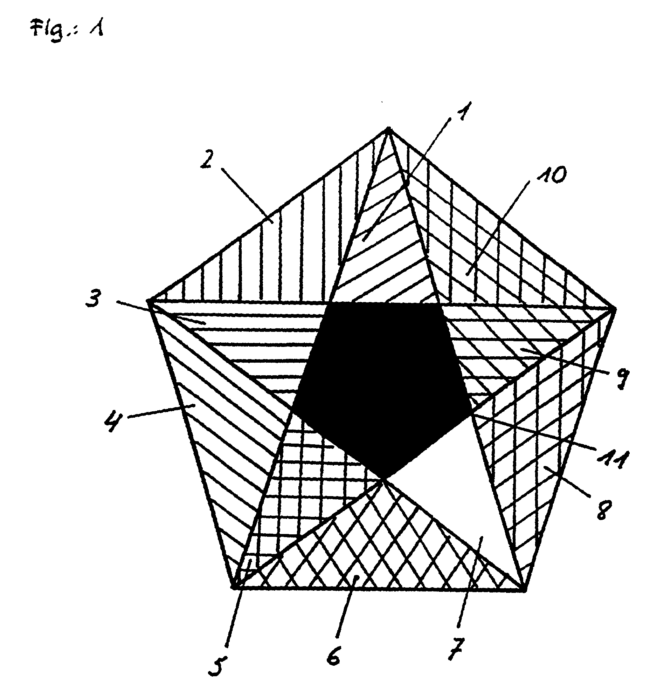

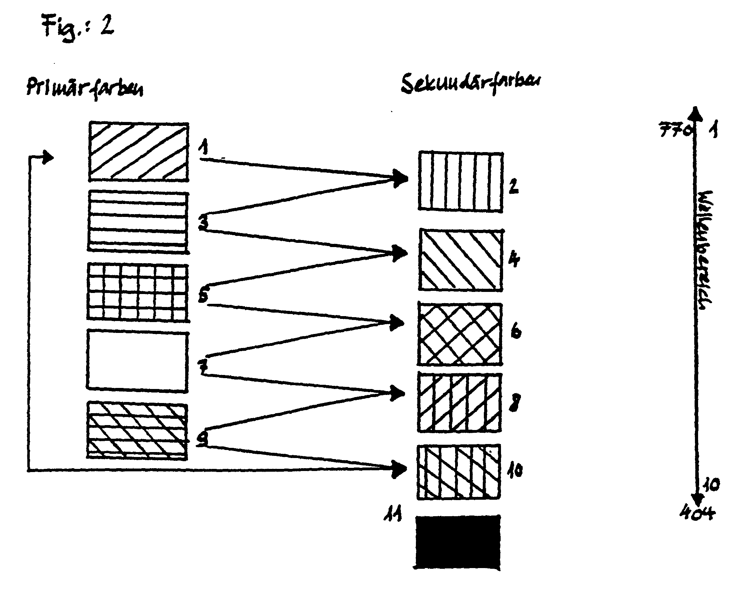

Fig. 1 zeigt, schematisch mittels eines Fünfecks dargestellt, den Grundgedanken der vorliegenden erfindungsgemässen Farbenlehre, währenddem Fig. 2 die Farbreihe der Farbenlehre darstellt, aufgeteilt nach Primärfarben und Sekundärfarben gemäss ihren Wellenlängen.

In den Fig. 1 und 2 bedeuten die nachfolgenden Bezugszeichen folgende Farben:
1 = Magenta
2 = Karminrot
3 = Rot
4 = Orange
5 = Gelb
6 = Grün
7 = Cyan
8 = Blau
9 = Ultramarin
10 = Violett
11 = Schwarz

Die Primärfarben weisen dabei ihre mittleren, typischen Wellenlängen auf. Beim Mischen in gleichen Anteilen ergeben die Primärfarben zusammen Schwarz und nicht Weiss.

Die vorliegende erfindungsgemässe Farbenlehre ist anwendbar auf alle möglichen technischen Bereiche, wo Farben, Farbtöne, Farbmischungen und Farbnuancen eingestellt bzw. erzielt werden müssen resp. wo Materialien eingefärbt werden müssen. Es ist nicht Sinn und Zweck der vorliegenden Erfindung, für jeden einzelnen Anwendungsbereich in der Technik eine genaue Anleitung zu liefern, wie im jeweiligen Bereich die Umsetzung der vorliegenden erfindungsgemässen Farbenlehre zu erfolgen hat. Dies stellt jeweils eine Optimierungsaufgabe im entsprechenden Bereich dar, jedoch ist damit in jedem technischen Anwendungsbereich die Anwendung der vorliegenden erfindungsgemässen Farbenlehre in dieser Erfindung miteingeschlossen, gibt sie doch den Anstoss zur eigentlichen Problemlösung.

## Patentansprüche

1. Farbwiedergabe bzw. Mehrfarbendruck, **gekennzeichnet durch** nur die Grund- bzw. Primärfarben Magenta, Rot, Gelb, Cyan und Ultramarin, welche Farben beim Mischen zu gleichen Anteilen zusammen Schwarz ergeben.

2. Farbwiedergabe bzw. Mehrfarbendruck nach Anspruch 1, **gekennzeichnet durch** die Sekundärfarben Karmin, Orange, Grün, Blau und Violett.

3. Farbwiedergabe bzw. Mehrfarbendruck nach einem der Ansprüche 1 oder 2, **gekennzeichnet durch** die folgenden Komplementärfarbenpaare: Magenta/Grün, Rot/Blau, Gelb/Violett, Cyan/Karmin und Ultramarin/Orange.

4. Verfahren zur Erzeugung einer Farbwiedergabe bzw. eines Mehrfarbendruckes, **dadurch gekennzeichnet, dass** zum Mischen bzw. zum Erzeugen der Farbtöne nur die Farben Magenta, Rot, Gelb, Cyan und Ultramarin als Primärfarben verwendet werden, welche Farben beim Mischen zu gleichen Anteilen zusammen Schwarz ergeben.

5. Verfahren nach Anspruch 4, **dadurch gekennzeichnet, dass** zusätzlich zu den fünf Primärfarben noch Weiss und Schwarz zum Aufhellen oder Dämpfen verwendet werden.

6. Anwendung des Verfahrens nach einem der Ansprüche 4 oder 5, zum Einfärben von Nasslacken, Pulverlacken, Tauchlacken, Dispersionen, Künstlerfarben und dergleichen.

7. Anwendung des Verfahrens nach einem der Ansprüche 4 oder 5, zum Einfärben von textilen und nichttextilen Geweben, Fasern, Folien, Netzen, Garnen, Seilen und dergleichen.

8. Anordnung bzw. Einfärbeset für die Durchführung des Verfahrens nach einem der Ansprüche 4 oder 5, **dadurch gekennzeichnet, dass** sie bzw. das Set nur die fünf Grund- bzw. Primärfarben Magenta, Rot, Gelb, Cyan und Ultramarin wie im Anspruch 4 definiert enthält.

## Claims

1. Colour reproduction or colour printing, **characterised by** the basic and primary colours magenta, red, yellow, cyan and ultramarine, colours which produce black when mixed in equal proportions.

2. Colour reproduction or colour printing in accordance with claim 1, **characterised by** the secondary colours carmine, orange, green, blue and violet.

3. Colour reproduction or colour printing in accordance with one of claims 1 or 2, **characterised by** the following pairs of complementary colours: magenta/green, red/blue, yellow/violet, cyan/carmine and ultramarine/orange.

4. Process to produce colour reproduction or colour printing, **characterised in that** only the colours magenta, red, yellow, cyan and ultramarine are used as primary colours and mixed to produce colour tones, these primary colours produce black when mixed in equal proportions.

5. Process in accordance with claim 4, **characterised in that**, in addition to the five primary colours, black and white are also used for lightening or darkening.

6. Application of the process in accordance with one of claims 4 or 5 in order to colour liquid dyes, coating powders, dipping paints, dispersions, artists' paints and the like.

7. Application of the process in accordance with one of claims 4 or 5 in order to colour textiles and non-textile materials, fibres, films, canvas, yarns, ropes and the like.

8. Arrangement and/or colouring set for the implementation of the process in accordance with one of claims 4 to 5, **characterised in that**, as defined in the claim 4, the set contains only the five basic or primary colours magenta, red, yellow, cyan and ultramarine.

## Revendications

1. Reproduction en couleurs ou impression en plusieurs couleurs **caractérisée par** les couleurs fondamentales ou primaires magenta, rouge, jaune, cyan et outremer, uniquement, lesquelles couleurs, lorsqu'elles sont mélangées en proportions égales, donnent le noir.

2. Reproduction en couleurs ou impression en plusieurs couleurs selon la revendication 1, **caractérisée par** les couleurs secondaires carmin, orange, vert, bleu et violet.

3. Reproduction en couleurs ou impression en plusieurs couleurs selon la revendication 1 ou 2, **caractérisée par** les paires de couleurs complémentaires suivantes : magenta/ vert, rouge/bleu, jaune/violet, cyan/carmin et outremer/ orange.

4. Procédé pour produire une reproduction en couleurs ou une impression en plusieurs couleurs, **caractérisé en ce que** pour mélanger ou produire les nuances de couleurs, on n'utilise comme couleurs primaires que les couleurs magenta, rouge, jaune, cyan et outremer, lesquelles couleurs, lorsqu'elles sont mélangées en proportions égales, donnent le noir.

5. Procédé selon la revendication 4, **caractérisé en ce qu'**on utilise, en plus des cinq couleurs primaires, le blanc et le noir pour éclaircir ou atténuer.

6. Application du procédé selon la revendication 4 ou 5, pour colorer des peintures humides, des peintures en poudre, des peintures à immersion, des dispersions, des peintures pour artistes, etc.

7. Application du procédé selon la revendication 4 ou 5 pour colorer des tissus textiles et non textiles, des fibres, des films, des treillis, des fils, des câbles, etc.

8. Dispositif ou set de coloration pour la mise en oeuvre du procédé selon la revendication 4 ou 5, **caractérisé en ce qu'**il ne contient que les cinq couleurs fondamentales ou primaires magenta, rouge, jaune, cyan et outremer telles qu'elles sont définies dans la revendication 4.
